# EUROPEAN PATENT SPECIFICATION

(11) **EP 3 486 258 B1**
(45) Date of publication and mention of the grant of the patent: **04.01.2023**
(21) Application number: 17827825.5
(22) Date of filing: 22.06.2017
(51) Int. Cl.: C08B 11/00, C08B 1/08, C08B 11/02, C08B 11/08, C08L 1/28

(54) **METHOD FOR PREPARING CELLULOSE ETHERS, CELLULOSE ETHERS PREPARED BY SAID METHOD AND ARCHITECTURAL FINISHING MATERIAL COMPRISING SAME**
VERFAHREN ZUR HERSTELLUNG VON CELLULOSEETHERN, NACH DIESEM VERFAHREN HERGESTELLTE CELLULOSEETHER UND ARCHITEKTONISCHES ENDBEARBEITUNGSMATERIAL DAMIT
PROCÉDÉ DE PRÉPARATION D'ÉTHERS DE CELLULOSE, ÉTHERS DE CELLULOSE PRÉPARÉS PAR LEDIT PROCÉDÉ ET MATÉRIAU DE FINITION ARCHITECTURALE LES COMPRENANT

(30) Priority: 13.07.2016 KR 20160088560
(43) Date of publication of application: 22.05.2019
(73) Proprietor: LOTTE Fine Chemical Co., Ltd., Nam-gu, Ulsan 44714 (KR)
(72) Inventor: GU, Bon Hyeok, Ulsan 44730 (KR); LEE, A Reum, Ulsan 44732 (KR); NAM, Wook Chan, Busan 48310 (KR); JEONG, Hyun Ji, Ulsan 44730 (KR)
(74) Representative: Michalski Hüttermann & Partner Patentanwälte mbB
(86) International application number: PCT/KR2017/006573
(87) International publication number: WO 2018/012751

(56) References cited:
- EP-A2- 0 292 242
- WO-A1-01/77183
- CN-A- 1 149 643
- DE-A1- 4 320 508
- JP-A- H01 144 401
- KR-A- 20060 051 803
- KR-A- 20090 054 212
- KR-A- 20130 067 748
- KR-B1- 100 782 644

## Description

### Technical Field

The present invention relates to a method of preparing a cellulose ether. It is further disclosed herein a cellulose ether prepared thereby, and finishing materials for construction including the cellulose ether. The invention more particularly relates to a method of preparing a cellulose ether characterized by adding a surfactant to a cellulose ether in a slurry state immediately after completion of etherification, thereby being capable of providing a cellulose ether having improved solubility in cold water, a cellulose ether prepared by the method, and finishing materials for construction including the cellulose ether.

### Background Art

Cellulose ethers refer to cellulose derivatives, hydroxyl groups of which are partially or wholly etherified. Such cellulose ethers are industrially very important compounds used in various fields such as pharmaceuticals, foods, cosmetics, finishing materials for construction.

In particular, a cellulose ether, which is a thickener including a natural material as a basic raw material, exhibits an excellent thickening effect even when added in a small amount and has an excellent water holding capacity unlike other chemical thickeners. Especially, a cellulose ether can be usefully used as a thickener for construction building because it can prevent separation of finishing materials for construction, improve workability, maintain moisture required for cementing, improve adhesion and a shape retention property, and improve sag resistance.

Such cellulose ethers are generally produced through a step of bringing an alkaline solution into contact with pulp purified to have high purity to prepare alkali cellulose, a step of etherifying the alkali cellulose with an etherifying agent, a washing step, a granulation step, a drying and grinding step, and a classification and packaging step.

To dissolve cellulose ether powder produced through these steps, hightemperature water at a temperature of a gel point or more should be used. When the cellulose ether powder is added to cold water, a surface of the powder is rapidly dissolved and becomes viscous, and a film is instantly formed on a surface of an aqueous solution, whereby it is difficult to produce a solution. Here, the cold water is used as a concept relative to the hot-temperature water at a gel point or higher and includes water at room temperature or lower.

In addition, when such a cellulose ether is applied to finishing materials for construction, a mass, referred to as a "lump", may be easily generated in some cases, whereby a surface thereof during a process becomes non-uniform. To address such a lump generation problem, the solubility of a cellulose ether in cold water should be increased. However, conventional methods have limitations in producing a cellulose ether having high solubility in cold water.

Accordingly, a method of adding a surfactant during a process of producing a cellulose ether so as to increase solubility thereof in cold water has been attempted.

For example, Patent Document 1 (Korean Patent Application Publication No. 10-2006-0051803) discloses a polymer granule production method characterized by dropwise addition, spraying, or mixing of a liquid including a surfactant or a surfactant powder while flowing a water-soluble cellulose ether.

In addition, Patent Document 2 (US 20140109798 A1) discloses an example of flowing water-soluble cellulose ether powder, and then sequentially spraying a surfactant solution and a tannin solution onto a surface of the cellulose ether to provide cellulose ether powder dissolved in cold water.

EP 0 292 242 refers to Cellulose ethers are prepared by reacting in a heterogenous reaction mixture an alkaline solution and an etherifying agent with a fibrous cellulose. The total of the required stoichiometric amount of the alkaline solution and at least a portion of the etherifying agent required in producing the cellulose ether are admixed at sufficiently low temperature to suppress reaction between the alkaline solution and the etherifying agent. The admixture is then contacted with the cellulose fibers, preferably by spraying the admixture thereupon. Additional etherifying agent is then added, if required, to the reaction mixture, and the heterogenous reaction mixture is agitated and reacted at an initial temperature below 40 °C, sufficient to produce alkalization of the cellulose. Thereafter the temperature is increased above 40 °C to produce etherification of the cellulose and form the cellulose ether.

DE 43 20508 A1 refers to thickener combinations for building products comprising nonionic cellulose ethers soluble in water or aqueous surfactant solutions and selected surfactants or naphthalene sulphonic acid condensates.

WO 01/77183 A1 refers to a process for the production of at least alkylated, nonionic cellulose ethers in which at least 10% of all hydroxyl groups are alkylated and which can be flocculated in water in a temperature range from 45 to 95 ° C, wherein the Cellulose from the conversion to the cellulose ether is added at least one surfactant in solid, liquid and / or dissolved form.

CN 1 149 643 A refers to Anti-fake thread of polyanionic cellulose ether and its application on anti-fake package of commodity.

KR 100 782 644 B1 refers to a method for the production of at least alkylated, non-ionic cellulose ethers, whereby at least 10 % of all hydroxy groups contained therein are alkylated and which may flocculate in water, within a temperature range of 45 to 95 °C.

However, when methods of spraying or dropwise addition of a surfactant while flowing cellulose ether granules or powder as in the related documents are used, a relatively large amount of surfactant and many physical actions are required to entirely uniformly treat the cellulose ether granules or powder with a surfactant and thus increase solubility in cold water.

In addition, since it takes a long time to dissolve a cellulose ether prepared according to the methods in cold water although it is dissolved in cold water, there are difficulties in using the cellulose ether as finishing materials for construction. For example, when such a cellulose ether is applied to finishing materials for construction, problems such as lump generation and poor surface workability may still occur.

Accordingly, there is a need for research on a method capable of shortening the time taken to dissolve a cellulose ether in cold water and a solution addressing problems such as lump generation when a cellulose ether prepared by the method is applied to finishing materials for construction. In the present specification, the time taken to dissolve in cold water is referred to as "solubility in cold water." As a time taken to dissolve in cold water decreases, solubility in cold water increases.

### [Related Art Documents]

### [Patent Documents]

(Patent Document 1) KR1020060051803 A
(Patent Document 2) US20140109798 A1

### Disclosure

### Technical Problem

Therefore, the present invention has been made in view of the above problems, and it is one object of the present invention to provide a cellulose ether preparation method including a step of adding a surfactant to a cellulose ether in a slurry state immediately after completion of etherification and a cellulose ether having excellent solubility in cold water prepared by the method.

It is another object of the present disdclosure to provide finishing materials for construction that includes the cellulose ether, thus exhibiting minimized lump generation when mixed with cold water and improved surface workability. That is, the present invention is provided to address a lump generation problem occurring in some cases by applying a cellulose ether to finishing materials for construction.

### Technical Solution

In accordance with an aspect of the present invention, the above and other objects can be accomplished by the provision of a method of preparing a cellulose ether, the method including (1) a step of obtaining alkalized cellulose by reacting cellulose with an alkalizing agent; (2) a step of obtaining a cellulose ether in a slurry state by etherifying the alkalized cellulose; and (3) a step of adding a surfactant to the cellulose ether in a slurry state upon completion of etherification.

The surfactant may have a hydrophilic-lipophilic balance (HLB) value of 1 to 15.

The surfactant may be selected from one or more nonionic surfactants selected from the group consisting of ethoxylated linear alcohols, ethoxylated alkyl phenols, fatty acid esters, amine derivatives, amide derivatives, alkyl polyglucosides, ethyleneoxide-propyleneoxide copolymers; one or more anionic surfactants selected from the group consisting of alkyl sulfates, alkyl ether sulfates, sulfated alkanol amides, glyceride sulfate, alpha olefin sulfonates, lignosulfonates, sulfo-carboxylic compounds, alkyl phosphored, and fatty acid derivatives; and one or more cationic surfactants selected from the group consisting of alkyl amines, alkyl ammonium salts, alkanol amides, amide acids, and quaternary alkyl ammonium salts. Preferably, the surfactant may be a nonionic surfactant.

The surfactant may be added in an amount of 0.05 to 0.7 part by weight based on 100 parts by weight of the cellulose.

In step (3), water may be further added to the cellulose ether in a slurry state.

In accordance with another aspect of the present invention, there is provided a cellulose ether prepared according to method. The cellulose ether may be selected from the group consisting of alkyl celluloses, hydroxyalkyl celluloses, hydroxyalkyl alkyl celluloses, and hydroxyalkyl alkylalkyl celluloses. Preferably, the cellulose ether may be selected from the group consisting of methylcellulose, hydroxyethyl cellulose, hydroxyethyl methyl cellulose, hydroxypropyl methyl cellulose, hydroxyethyl ethyl cellulose, and hydroxyethyl methylethyl cellulose.

In accordance with still another aspect of the present disclosure there is provided finishing materials for construction including the cellulose ether. Here, the content of the cellulose ether may be 0.01 to 1.0 % by weight based on a total weight of the finishing materials for construction.

### Advantageous Effects

A method of preparing a cellulose ether according to the present invention can provide a cellulose ether having excellent solubility in cold water, compared to conventional methods of spraying or dropwise addition of a surfactant while flowing a cellulose ether in a granule or powder state.

In addition, according to the method of preparing a cellulose ether of the present invention, a cellulose ether having superior solubility in cold water can be provided although a surfactant is added in a smaller amount, compared to conventional cases. Accordingly, solubility in cold water, i.e., surfactant treatment efficiency, relative to the amount of the added surfactant can be increased.

When a cellulose ether prepared according to the method is applied to finishing materials for construction, a lump generation amount can be minimized even when mixed with cold water, and finishing materials for construction having improved surface workability can be obtained.

### Modes of the Invention

The present invention relates to a method of preparing a cellulose ether, the method including (1) a step of obtaining alkalized cellulose by reacting cellulose with an alkalizing agent; (2) a step of obtaining a cellulose ether in a slurry state by etherifying the alkalized cellulose; and (3) a step of adding a surfactant to the cellulose ether in a slurry state upon completion of etherification, a cellulose ether prepared by the method, and finishing materials for construction including the cellulose ether.

First, each of the steps of the method of preparing a cellulose ether will be described in detail below.

### (1) Step of obtaining alkalized cellulose

This step is a step of obtaining alkalized cellulose by reacting cellulose with an alkalizing agent.

The step of obtaining alkalized cellulose may be performed using reactants and reaction conditions generally used in the field to which the present invention pertains. For example, a method of adding cellulose to a reaction solvent and then adding an alkalizing agent thereto to convert the cellulose into alkalized cellulose may be used.

In particular, the cellulose may be made by finely pulverizing wood pulp, and the reaction solvent may include water, acetone, tertiary butyl alcohol, isopropyl alcohol, dimethyl ether, or a combination thereof. Here, a use amount of the reaction solvent may be 50 to 2000 parts by weight based on 100 parts by weight of the cellulose.

The alkalizing agent may include an alkali metal hydroxide. For example, the alkalizing agent may include sodium hydroxide, potassium hydroxide, lithium hydroxide, or a combination thereof. The alkalizing agent may be added in an amount of 5 to 600 parts by weight based on 100 parts by weight of the cellulose. When the alkalizing agent is added within the above range, the etherifying agent is uniformly substituted in the whole of the cellulose and reactivity of the etherifying agent increases in the following step (2), whereby a cellulose ether having a desired substitution degree may be obtained.

The alkalizing agent is added to weaken a crystal structure of the cellulose such that an etherifying agent, described below, can easily react with the cellulose. That is, the alkalizing agent facilitates a reaction between the cellulose and the etherifying agent. Alkalized cellulose which has been converted in this manner should be stirred for a predetermined time at room temperature (20 to 30°C) so as to uniformly weaken the crystal structure thereof.

### (2) Step of obtaining cellulose ether in slurry state

This step is a step of obtaining cellulose ether in a slurry state by etherifying the alkalized cellulose.

As in step (1), this step may be performed using reactants and reaction conditions generally used in this field. For example, a method of adding an etherifying agent to alkalized cellulose and then elevating the temperature to cause a reaction may be used.

In particular, the etherifying agent may include at least one compound of alkylene oxide compounds including propylene oxide, ethylene oxide, or a combination thereof; and alkyl chloride compounds including methyl chloride, ethyl chloride, propyl chloride, butyl chloride, or a combination thereof.

The etherifying agent may be added in an amount of 20 to 400 parts by weight based on 100 parts by weight of the cellulose. When the amount of the etherifying agent is within the above range, the risk of an adverse reaction in a process and the formation of by-products may be reduced and a cellulose ether having a desired substitution degree may be obtained.

In this step, the reaction may be initiated at an initial reaction temperature of 10 to 30°C, and may be allowed to proceed at 40 to 70°C for 10 to 50 minutes after addition of an etherifying agent, followed by maintaining the reaction for 10 to 150 minutes after elevating the temperature to 70 to 100°C. As a result, a cellulose ether may be obtained. When a reaction temperature is within the above range after addition of the etherifying agent, the etherifying agent may have a heat of reaction sufficient for reacting with cellulose, and risks such as an increase in production costs and an adverse reaction due to the use of an excessive heat source may be reduced. In addition, when a reaction time is within the above range, the reactivity of the etherifying agent may be highly maintained and the productivity of a cellulose ether may be maintained.

When the etherification is completed, a cellulose ether in a slurry state is obtained. Here, this slurry includes a cellulose ether, water, and the like which are products of the etherification.

### (3) Step of adding surfactant

This step is a step of adding a surfactant to the cellulose ether in a slurry state upon completion of etherification.

As described above, the slurry upon completion of etherification includes a cellulose ether and water. Since a surfactant is added to the slurry containing water, the surfactant may be entirely, uniformly adsorbed on surfaces of cellulose ether particles, as a reaction product, while moving along the flow of water when a physical action such as agitation is applied. That is, water contained in the slurry facilitates uniform mixing between the cellulose ether and the surfactant, thereby increasing treatment efficiency of the surfactant. Accordingly, a cellulose ether having excellent solubility in cold water may be provided even when the surfactant is added in a small amount.

In this step, water may be further added to the cellulose ether in a slurry state. When water is further added to the cellulose ether, uniform mixing between the cellulose ether and the surfactant may be further improved.

Meanwhile, an HLB value of the surfactant is preferably 1 to 15. Here, HLB is a value indicating the affinity of a surfactant for water or oil. As the HLB value decreases, hydrophobicity increases and thus affinity for water decreases. Accordingly, the surfactant may be easily adsorbed on a surface of the cellulose ether, whereby solubility in cold water may be improved. However, when the HLB value is less than 1 or greater than 15, solubility in cold water may be slightly decreased.

The surfactant may be selected from nonionic surfactants, cationic surfactants, and anionic surfactants. The surfactant may be preferably a nonionic surfactant. In particular, the surfactant may be selected from among one or more nonionic surfactants selected from the group consisting of ethoxylated linear alcohols, ethoxylated alkyl phenols, fatty acid esters, amine derivatives, amide derivatives, alkyl polyglucosides, ethyleneoxide-propyleneoxide copolymers; one or more anionic surfactants selected from the group consisting of alkyl sulfates, alkyl ether sulfates, sulfated alkanol amides, glyceride sulfate, alpha olefin sulfonates, lignosulfonates, sulfo-carboxylic compounds, alkyl phosphored, and fatty acid derivatives; and one or more cationic surfactants selected from the group consisting of alkyl amines, alkyl ammonium salts, alkanol amides, amide acids, and quaternary alkyl ammonium salts.

The surfactant is preferably added in an amount of 0.05 to 0.7 part by weight based on 100 parts by weight of the cellulose. When the amount of the surfactant is less than 0.05 part by weight, it is difficult to anticipate improved solubility in cold water. On the other hand, when the amount of the surfactant is greater than 0.7 part by weight, air bubbles may be generated at a surface of finishing materials for construction including a resultant cellulose ether, whereby surface workability may be decreased.

### (4) Washing step

The present invention may further include a step of washing the cellulose ether slurry to which the surfactant has been added according to step (3). This washing step may be performed using reactants and reaction conditions generally used in this field. For example, this step may include a step of washing stepwise in the order of low concentration to high concentration with a solvent mixture including acetone and water and then filtering.

Subsequently, the washed cellulose ether may be commercialized through a granulation step, a drying step, a pulverizing step, and a classification/packaging step.

The present invention provides a cellulose ether prepared according to the method.

Here, the cellulose ether may be selected from the group consisting of alkyl celluloses, hydroxyalkyl celluloses, hydroxyalkyl alkyl celluloses, and hydroxyalkyl alkylalkyl celluloses. More preferably, the cellulose ether may be selected from the group consisting of methylcellulose, hydroxyethyl cellulose, hydroxyethyl methyl cellulose, hydroxypropyl methyl cellulose, hydroxyethyl ethyl cellulose, and hydroxyethyl methylethyl cellulose.

In addition, the present invention provides finishing materials for construction including the cellulose ether.

The content of the cellulose ether is preferably 0.01 to 1.0 % by weight based on a total weight of finishing materials for construction. When the content of the cellulose ether is less than 0.01 % by weight, viscosity and a water holding capacity may be decreased. On the other hand, when the content of the cellulose ether is greater than 1.0 % by weight, workability may be decreased.

Since a cellulose ether produced according to the present invention exhibits excellent solubility in cold water, finishing materials for construction including the cellulose ether has a low lump amount and exhibits excellent surface workability when mixed with cold water. Such finishing materials for construction may be preferably used for mortar containing cement or gypsum as a binder. For example, the finishing materials for construction may be used in various civil engineering and construction fields such as cement mortar for tiles, gypsum/cement mortar for plaster, decorative building finishing materials, e.g., renders such as monocouche and monocapa, building exterior materials, roofing materials, flooring materials, and soundproof walls.

Hereinafter, the present invention will be described in more detail with reference to the following Examples.

### Example 1

1 kg of finely pulverized pulp (cellulose, Ethenier-F manufactured by Rayonier), 1 kg of dimethyl ether as a reaction solvent, and 1.25 kg of an aqueous sodium hydroxide solution having a concentration of 50 % by weight (SAMCHUN CHEMICALS) as an alkalizing agent were fed into a pressure reactor, followed by stirring at 25°C and 80 rpm for 60 minutes. As a result, alkalized cellulose was obtained.

Subsequently, 125 g of ethylene oxide and 1 kg of methyl chloride were fed into the reactor, and then a reaction was allowed to proceed at 50°C for 30 minutes. Subsequently, the temperature of the reactor was elevated to 90°C at a rate of 2 °C/min, followed by etherification for 60 minutes.

Subsequently, the cellulose ether in a slurry state upon completion of etherification was transferred to a slurry tank, and then 1 g of Pluronic RPE2520 (Basf), as a nonionic surfactant, and 7 L of water were fed into the slurry tank, followed by stirring at 90°C and 100 rpm for 1 minute. Here, an HLB value of the nonionic surfactant was 6, and the nonionic surfactant was added in an amount of 0.1 part by weight based on 100 parts by weight of the cellulose.

Subsequently, a content in the slurry tank was transferred to a washer, followed by washing and filtering stepwise with 5 L of water.

Subsequently, the filtered content was transferred to and granulated in a granulator, and then transferred to and pulverized in a combined mill, followed by being classified into a size of 500 µm or less by means of a classifier. As a result, a cellulose ether was obtained.

### Example 2

A cellulose ether was prepared in the same manner as in Example 1, except that the nonionic surfactant was added in an amount of 5 g. This nonionic surfactant addition amount corresponds to 0.5 part by weight based on 100 parts by weight of cellulose.

### Example 3

A cellulose ether was prepared in the same manner as in Example 1, except that the nonionic surfactant was added in an amount of 13 g. This nonionic surfactant addition amount corresponds to 1.3 parts by weight based on 100 parts by weight of cellulose.

### Example 4

A cellulose ether was prepared in the same manner as in Example 1, except that 1 g of TEGO SML 20 (Evonik) having an HLB value of 17 as a nonionic surfactant was used instead of the nonionic surfactant. This nonionic surfactant addition amount corresponds to 0.1 part by weight based on 100 parts by weight of cellulose.

### Example 5

A cellulose ether was prepared in the same manner as in Example 1, except that 5 g of abietic acid (Sigma-Aldrich) having an HLB value of 8 as an anionic surfactant was used instead of the nonionic surfactant. This anionic surfactant addition amount corresponds to 0.5 part by weight based on 100 parts by weight of cellulose.

### Example 6

A cellulose ether was prepared in the same manner as in Example 1, except that 5 g of REWOQUAT CR3099 (Evonik) having an HLB value of 10 as a cationic surfactant was used instead of the nonionic surfactant. This cationic surfactant addition amount corresponds to 0.5 part by weight based on 100 parts by weight of cellulose.

### Comparative Example 1

A cellulose ether in a slurry state which had been transferred to a slurry tank according to Example 1 was directly transferred to a washer without addition of a surfactant and water thereto. Subsequently, washing and filtration were performed in the same manner as in Example 1.

Subsequently, the filtered content in the washer was transferred to a granulator equipped with a ribbon-shaped stirring blade, and then the stirring blade was rotated to flow a content in the granulator. In addition, the content was granulated while spraying a dispersing solution, prepared by dispersing 1 g of Pluronic RPE2520 (Basf), as a nonionic surfactant, in 1000 ml of water, into the granulator. Here, an HLB value of the nonionic surfactant was 6, and the nonionic surfactant addition amount corresponds to 0.1 part by weight based on 100 parts by weight of cellulose.

Subsequently, drying, pulverization, and classification steps were performed in the same manner as in Example 1. As a result, a cellulose ether was obtained.

### Comparative Example 2

A cellulose ether in a slurry state which had been transferred to a slurry tank according to Example 1 was directly transferred to a washer without addition of a surfactant and water thereto. Subsequently, washing, filtration, and granulation were performed in the same manner as in Example 1, thereby obtaining cellulose ether granules.

The cellulose ether granules were transferred to a combined mill. In addition, the cellulose ether granules were pulverized while spraying a dispersing solution, prepared by dispersing 5 g of Pluronic RPE2520 (Basf), as a nonionic surfactant, in 1000 ml of water, into a pulverizer. Here, an HLB value of the surfactant was 6, and the nonionic surfactant addition amount corresponds to 0.5 part by weight based on 100 parts by weight of cellulose.

Subsequently, a classification step was performed in the same manner as in Example 1. As a result, a cellulose ether was obtained.

### Comparative Example 3

A cellulose ether was prepared in the same manner as in Comparative Example 1, except that 5 g of abietic acid (Sigma-Aldrich) having an HLB value of 8, as an anionic surfactant, was used instead of the nonionic surfactant. This anionic surfactant addition amount corresponds to 0.5 part by weight based on 100 parts by weight of cellulose.

### Comparative Example 4

A cellulose ether was prepared in the same manner as in Comparative Example 1, except that 5 g of REWOQUAT CR3099 (Evonik) having an HLB value of 10, as a cationic surfactant, was used instead of the nonionic surfactant. This cationic surfactant addition amount corresponds to 0.5 part by weight based on 100 parts by weight of cellulose.

### < Evaluation methods >

### 1. Solubility in cold water

1 g of the cellulose ether prepared according to each of Examples 1 to 6 and Comparative Examples 1 to 4 was dropped into 100 ml of room-temperature water while stirring the water. Subsequently, the time when the cellulose ether was completely dissolved in the water was measured to evaluate solubility in cold water.

### 2. Lump generation amount

First, gypsum mortar was prepared using the cellulose ether prepared according to each of Examples 1 to 6 and Comparative Examples 1 to 4.

In particular, 1200 g of anhydrous gypsum used in Europe, 400 g of calcium carbonate (NAC600, Woojin Chemical Co., Ltd.), and 2.7 g of citric acid (Sigma-Aldrich) were dry mixed, thereby obtaining a dry mixture. The cellulose ether and room-temperature water were added to the dry mixture, and then kneaded, thereby preparing gypsum mortar. Here, an addition amount of the cellulose ether was 0.2 part by weight based on 100 parts by weight of the dry mixture, and an addition amount of the water was 70.0 parts by weight based on 100 parts by weight of the dry mixture.

The number of lumps generated when the prepared gypsum mortar was spread on a working surface having a unit area of 0.2 m × 0.4 m was counted to evaluate a lump generation amount.

### 3. Surface workability

The lumps generated when the gypsum mortar was spread on the working surface having a unit area of 0.2 m × 0.4 m according to the evaluation method (2) were removed, and the number of operations performed to make a uniform surface with no bubbles was counted to evaluate surface workability.

Results obtained by the evaluation methods are summarized in Table 1 below. Here, treatment steps 1, 2, and 3 in Table 1 below represent surfactant addition steps. In particular, step 1 is a step of feeding a surfactant into a slurry tank, step 2 is a step of feeding a surfactant into a granulator, and step 3 is a step of feeding a surfactant into a combined mill.

**[Table 1]**

| | Surfac tant type | HL B | Treatme nt step | | | Surfactant addition amount (parts by weight) | Solubi lity in cold water (s) | Lump generation amount (No.) | Surface workabilit y (times) |
|---|---|---|---|---|---|---|---|---|---|
| | | | 1 | 2 | 3 | | | | |
| Exam ple 1 | Nonio nic | 6 | ● | | | 0.1 | 20 | 0 | 2 |
| Exam ple 2 | Nonio nic | 6 | ● | | | 0.5 | 15 | 0 | 2 |
| Exam ple 3 | Nonio nic | 6 | ● | | | 1.3 | 15 | 0 | 13 |
| Exam ple 4 | Nonio nic | 17 | ● | | | 0.1 | 45 | 2 | 5 |
| Exam ple 5 | Anion ic | 8 | ● | | | 0.5 | 40 | 1 | 2 |
| Exam ple 6 | Cation ic | 10 | ● | | | 0.5 | 40 | 1 | 3 |
| Comp arati v e | Nonio nic | 6 | | ● | | 0.1 | 70 | 3 | 7 |
| Exam ple 1 | | | | | | | | | |
| Comp arati v e Exam ple 2 | Nonio nic | 6 | | | ● | 0.5 | 55 | 3 | 5 |
| Comp arati v e Exam ple 3 | Anion ic | 8 | | ● | | 0.5 | 80 | 6 | 12 |
| Comp arativ e Exam ple 4 | Cation ic | 10 | | ● | | 0.5 | 70 | 5 | 10 |

From Table 1, it can be confirmed that the cellulose ethers prepared according to Examples 1 to 6 wherein a surfactant was added to a cellulose ether in a slurry state upon completion of etherification exhibit superior solubility in cold water to the cellulose ethers according to Comparative Examples 1 to 4.

For example, when comparing Example 1 and Comparative Example 1, although only the surfactant treatment step is different and the same type of surfactant is used in the same amount, it can be confirmed that Example 1 is remarkably superior in solubility in cold water, lump generation amount, and surface workability. Similarly, when comparing Example 2 and Comparative Example 2, although only the surfactant treatment step is different and the same type of surfactant is used in the same amount, Example 2 is remarkably superior in solubility in cold water, lump generation amount, and surface workability. That is, it can be confirmed that, when a surfactant is added to a cellulose ether in a slurry state, the treatment efficiency of the surfactant, i.e., solubility in cold water using the same amount of the surfactant, remarkably increases.

In addition, it can be confirmed that, in the case of Example 4 in which a surfactant having an HLB value of 17 was used, solubility in cold water is slightly decreased, compared to Examples 1 to 3 and 5 to 6 using surfactants having preferred HLB values of 1 to 15 proposed in the present invention. From these results, it can be confirmed that it is preferred to use a surfactant having an HLB value within the proposed range.

Further, it can be confirmed that Example 2, in which 0.5 part by weight of a nonionic surfactant were added, exhibits superior solubility in cold water and a decreased lump amount, compared to Examples 5 and 6 in which a cationic or anionic surfactant was used in the same amount as the nonionic surfactant. From this result, it can be confirmed that it is further preferred to use a nonionic surfactant as a surfactant.

Examining Examples 1 to 3 in which a nonionic surfactant having the same HLB value was used, it can be confirmed that, in the case of Example 3 in which the surfactant was added in an amount of 1.3 parts by weight, lumps were not generated, but bubbles were generated at the surface of mortar and thus surface workability was slightly decreased. On the other hand, it can be confirmed that, in the case of Examples 1 and 2 in which the surfactant was added in an amount of 0.05 to 0.7 parts by weight which is the preferred range proposed in the present invention, both a lump generation amount and surface workability are improved. From this result, it can be confirmed that it is further preferred to add the surfactant within the proposed amount range.

## Claims

1. A method of preparing a cellulose ether, the method comprising:
(1) a step of obtaining alkalized cellulose by reacting cellulose with an alkalizing agent;
(2) a step of obtaining a cellulose ether in a slurry state by etherifying the alkalized cellulose; and
(3) a step of adding a surfactant to the cellulose ether in a slurry state upon completion of etherification.

2. The method according to claim 1, wherein the surfactant has a hydrophilic-lipophilic balance (HLB) value of 1 to 15.

3. The method according to claim 1, wherein the surfactant is selected from one or more nonionic surfactants selected from the group consisting of ethoxylated linear alcohols, ethoxylated alkyl phenols, fatty acid esters, amine derivatives, amide derivatives, alkyl polyglucosides, ethyleneoxide-propyleneoxide copolymers; one or more anionic surfactants selected from the group consisting of alkyl sulfates, alkyl ether sulfates, sulfated alkanol amides, glyceride sulfate, alpha olefin sulfonates, lignosulfonates, sulfo-carboxylic compounds, alkyl phosphored, and fatty acid derivatives; and one or more cationic surfactants selected from the group consisting of alkyl amines, alkyl ammonium salts, alkanol amides, amide acids, and quaternary alkyl ammonium salts.

4. The method according to claim 1, wherein the surfactant is a nonionic surfactant.

5. The method according to claim 1, wherein the surfactant is added in an amount of 0.05 to 0.7 part by weight based on 100 parts by weight of the cellulose.

6. The method according to claim 1, wherein, in step (3), water is further added to the cellulose ether in a slurry state.

## Patentansprüche

1. Verfahren zur Herstellung eines Celluloseethers, wobei das Verfahren umfasst:
(1) einen Schritt des Erhaltens von alkalisierter Cellulose durch Umsetzen von Cellulose mit einem Alkalisierungsmittel;
(2) einen Schritt des Erhaltens eines Celluloseethers in einem Aufschlämmungszustand durch Verethern der alkalisierten Cellulose; und
(3) einen Schritt des Zufügens eines Tensids zu dem Celluloseether in einem Aufschlämmungszustand nach Abschluss der Veretherung.

2. Verfahren nach Anspruch 1, wobei das Tensid einen Wert des hydrophil-lipophilen Gleichgewichts (HLB) von 1 bis 15 hat.

3. Verfahren nach Anspruch 1, wobei das Tensid ausgewählt ist aus einem oder mehreren nicht-ionischen Tensiden ausgewählt aus der Gruppe bestehend aus ethoxylierten linearen Alkoholen, ethoxylierten Alkylphenolen, Fettsäureestern, Aminderivaten, Amidderivaten, Alkylpolyglucosiden, Ethylenoxid-Propylenoxid-Copolymeren; einem oder mehreren anionischen Tensiden ausgewählt aus der Gruppe bestehend aus Alkylsulfaten, Alkylethersulfaten, sulfatierten Alkanolamiden, Glyceridsulfat, alpha-Olefinsulfonaten, Lignosulfonaten, Sulfocarboxylverbindungen, Alkylphosphorverbindungen und Fettsäurederivaten; und einem oder mehreren kationischen Tensiden ausgewählt aus der Gruppe bestehend aus Alkylaminen, Alkylammoniumsalzen, Alkanolamiden, Amidsäuren und quaternären Alkylammoniumsalzen.

4. Verfahren nach Anspruch 1, wobei das Tensid ein nicht-ionisches Tensid ist.

5. Verfahren nach Anspruch 1, wobei das Tensid in einer Menge von 0,05 bis 0,7 Gewichtsteilen zugefügt wird, bezogen auf 100 Gewichtsteile der Cellulose.

6. Verfahren nach Anspruch 1, wobei in Schritt (3) des Weiteren Wasser zu dem Celluloseether im Aufschlämmungszustand gegeben wird.

## Revendications

1. Procédé de préparation d'un éther de cellulose, le procédé comprenant :
(1) une étape d'obtention d'une cellulose alcalinisée par mise en réaction d'une cellulose avec un agent alcalinisant ;
(2) une étape d'obtention d'un éther de cellulose à l'état de suspension par éthérification de la cellulose alcalinisée ; et
(3) une étape d'ajout d'un tensioactif à l'éther de cellulose à l'état de suspension après la fin de l'éthérification.

2. Procédé selon la revendication 1, le tensioactif possédant une valeur d'équilibre hydrophilelipophile (HLB) de 1 à 15.

3. Procédé selon la revendication 1, le tensioactif étant choisi parmi un ou plusieurs tensioactifs non ioniques choisis dans le groupe constitué par des alcools linéaires éthoxylés, des alkylphénols éthoxylés, des esters d'acides gras, des dérivés d'amines, dérivés d'amides, des alkylpolyglucosides, des copolymères d'oxyde d'éthylène-oxyde de propylène ; un ou plusieurs tensioactifs choisis dans le groupe constitué par des sulfates d'alkyle, des sulfates d'éther d'alkyle, des alcanol amides sulfatés, un sulfate de glycéride, des sulfonates d'alphaoléfines, des lignosulfonates, des composés sulfo-carboxyliques, un composé alkylphosphoré, et des dérivés d'acides gras ; et un ou plusieurs tensioactifs cationiques choisis dans le groupe constitué par des alkylamines, des sels d'alkylammonium, des alcanol amides, des acides d'amide, et des sels d'alkylammonium quaternaires.

4. Procédé selon la revendication 1, le tensioactif étant un tensioactif non ionique.

5. Procédé selon la revendication 1, le tensioactif étant ajouté en une quantité de 0,05 à 0,7 partie en poids sur la base de 100 parties en poids de la cellulose.

6. Procédé selon la revendication 1, dans lequel, dans l'étape (3), de l'eau est en outre ajoutée à l'éther de cellulose à l'état de suspension.
